# EUROPEAN PATENT SPECIFICATION

(11) **EP 0 743 222 B1**
(45) Date of publication and mention of the grant of the patent: **15.09.1999**
(21) Application number: 95830446.1
(22) Date of filing: 23.10.1995
(51) Int. Cl.: B60N 2/48

(54) **Height adjustment device for a support rod of a headrest for motor-vehicle seats**
Vorrichtung zur Höhenverstellung für einen Stützstab einer Kopfstütze für Fahrzeugsitze
Dispositif de réglage en hauteur pour une barre de support d'un appui-tête pour sièges de véhicules

(30) Priority: 18.04.1995 IT TO950306
(43) Date of publication of application: 20.11.1996
(73) Proprietor: GESTIND-M.B." MANIFATTURA DI BRUZOLO" S.P.A, I-10050 Bruzolo (Torino) (IT)
(72) Inventor: De Filippo, Emilio (IT), I-10050 Bruzolo (Torino) (IT)
(74) Representative: Boggio, Luigi

(56) References cited:
- EP-A- 0 165 593
- DE-A- 3 301 073
- DE-A- 3 437 803
- DE-U- 8 620 793
- DE-U- 9 404 697
- US-A- 5 228 183

## Description

The present invention is generally related to headrests for motor-vehicle seats, and is more particularly concerned with a height adjustment device for a support rod of such a headrest, the support rod having a row of positioning notches.

From FR-A-2.671.587 an adjustment device for headrests is known, comprising a sleeve through which the support rod is axially slidably fitted and having an enlarged hollow portion in which an annular locking slider of moulded plastics material having a push button is displaceable perpendicularly to the support rod and adapted to cooperate, under the action of resilient thrust means, with said positioning notches so as to prevent displacement of the support rod relative to the sleeve.

In this known solution the annular slider is integrally formed with a transverse element which constitutes a stop member cooperating with the positioning notches of the support rod. The resilient thrust means of the slider are also integrally formed therewith, and are constituted by an arcuate resilient arm.

This arrangement, while on one hand has the advantage of being constructively simple and constituted by a reduced number of components, on the other hand is not capable of performing restraint of the support rod in a stable and safe way and without plays which may generate headrest vibrations. Additionally, the structure of the slider with the push button is relatively weak and may involve the risk of breakage, particularly as far as the integral transverse member, cooperating with the positioning notches of the support rod, is concerned.

EP-A-0165593 and DE-A-3437803 disclose a height adjustment device having the features contained in the pre-characterising portion of claim 1 and comprising a locking slider which incorporates a U-shaped metal element whose ends are engaged with the slider and whose central section acts as an engagement member with the positioning notches of a support rod. In the solutions shown in these prior art documents, the locking slider is moulded over the ends of the U-shaped metal element. This solution is costly because it requires positioning of the U-shaped element in the mould and also because it requires bending operations for conferring the desired shape to the U-shaped metal member.

The object of the present invention is to overcome the above drawbacks, and this object is achieved by a device according to claim 1.

According to a preferred embodiment of the invention, said enlarged hollow portion of the sleeve has a bottom wall formed with a pair of spaced-apart apertures delimiting respective stepped catches, and said slider has a corresponding pair of front resilient projections formed with respective engagement teeth, said teeth being adapted to snap fit into said apertures upon assembling the device and to cooperate with said stepped catches, under the action of a compression helical spring acting between a seat of the enlarged hollow portion and a bar element of the slider integrally formed between said front projections.

According to a further aspect of the invention, the sleeve has a tubular appendage beneath the enlarged hollow portion, intended to be axially fitted within an attachment tubular element fixed to the backrest structure of a motor-vehicle seat, said tubular appendage being formed with yelding axial tip sections resiliently tightened against the support rod.

The invention will now be disclosed in detail with reference to the accompanying drawings, purely provided by way of non-limiting example, in which:

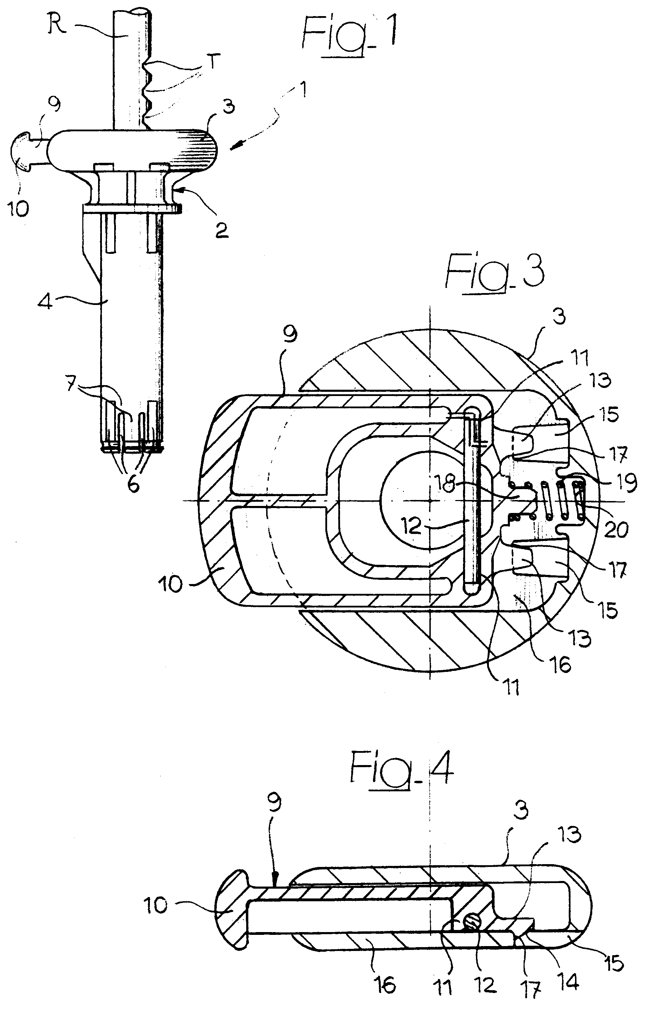

figure 1 is a diagrammatic lateral elevational view of a height adjustment device for a support rod of a headrest for motor-vehicle seats according to the invention,
figure 2 is a vertically sectioned and enlarged view of the adjustment device of figure 1 in the mounted condition,
figure 3 is a horizontal section along line III-III of figure 2, and
figure 4 is a vertically sectioned view along line IV-IV of figure 2.

In the drawings, reference numeral 1 generally designates a height adjustment device for a support rod of a headrest (not shown in the drawings) for motor-vehicle seats. In a way known per se, the support rod is connected superiorly to the headrest framework, and is formed with a vertical row of positioning notches T by means of which the adjustment device 1 allows setting the desired vertical positioning of the headrest.

Even in a way known per se, the headrest is provided with a pair of such support rods R, to each of which a respective adjustment device 1 is associated. The following description is applicable to both adjustment devices.

The device 1 essentially comprises a sleeve 2 of moulded plastics material, through which the support rod R is axially slidably fitted, and having superiorly an enlarged hollow portion 3 and inferiorly a tubular appendage 4.

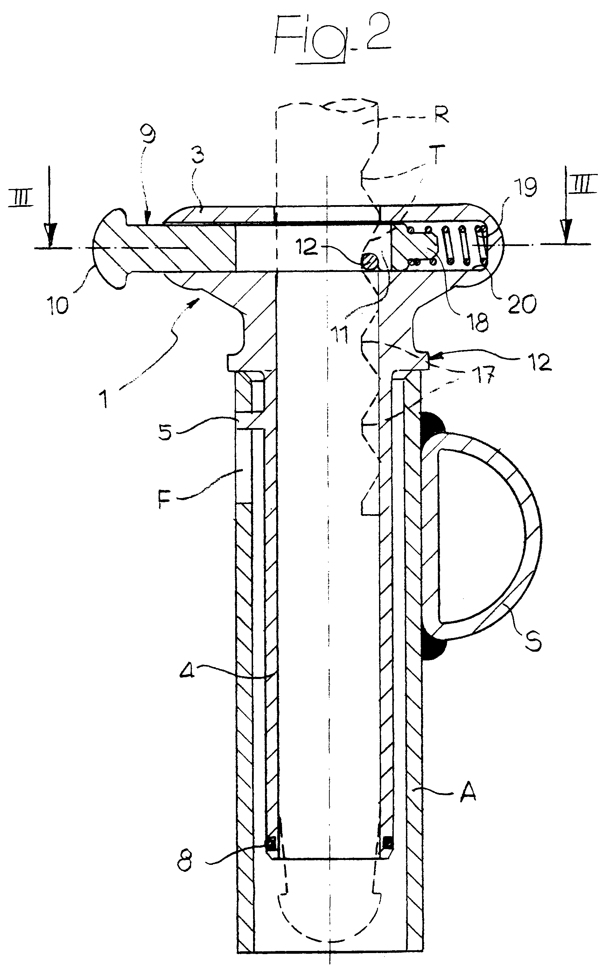

As depicted in detail in figure 2, the tubular appendage 4 is intended for mounting within a tubular attachment member A fixed to the structure S of the backrest of a motor-vehicle seat. An anchoring tooth 5, projecting from the tubular appendage 4 and engaging a slit F, performs locking of the device 1 relative to the tubular attachment member A.

The end of the tubular appendage 4 opposite to the enlarged hollow portion 3 is formed with axial slots 6 defining axial yelding tip sections 7 which are tightened, by means of an outer resilient ring 8 (figure 2), against the surface of the lower part of the support rod R. In this way sliding of the latter along the sleeve 2 is frictioned, and withdrawal thereof upwardly with respect to the sleeve 2 itself is also prevented.

An annular slider 9, formed in one piece of moulded plastics material with an outer push-button 10, is slidable within the enlarged hollow portion 3, perpendicularly to the support rod R.

In correspondence of its inner end, the slider 9 is formed with two integral fork elements 11 within which the opposite ends of a metal pin 12 are snap engaged, whose central section is placed along the sliding path of the support rod R.

Forwardly to the metal pin 12, the slider 9 is formed with a pair of resilient front projections 13 provided with respective engagement teeth 14 movable into apertures 15 of the bottom wall 16 of the enlarged hollow portion 3. The inner edges of the apertures 15 define respective stepped catches 17 cooperating with the engagement teeth 14 of the slider 9.

Between the two resilient projections 13, the slider 9 is further formed with an integral projecting bar element 18 over which one end of a compression helical spring 19 is wound, the opposite end of which bears against a seat 20 of the enlarged hollow portion 3.

The above-disclosed arrangement is such that, upon assembling of the device 1, introduction of the slider 9 into the enlarged hollow portion 3 performs snap fitting of the teeth 14 into the apertures 15.

In operation, the spring 19 is normally urging the slider 9 towards the outside of the enlarged hollow portion 3, placing the metal pin 12 into engagement with one of the positioning notches T of the support rod R. In this position the engagement teeth 14 of the slider 9 abut against the stepped catches 17 of the enlarged hollow portion 3.

For the height adjustment of the support rod R, it is sufficient to operate the push button 10 so as to push the slider 9 against the action of the thrust spring 19, thus withdrawing the metal pin 12 from the positioning notch T. The support rod R can thus be displaced along the sleeve 2 until reaching the desired height adjustment, and then locked in that position by releasing the push button 10, whereby the spring 19 will displace the metal pin 12 into engagement with the corresponding positioning notch T.

Naturally, the details of construction and the embodiments may be varied with respect to what has been described and illustrated, if not thereby departing from the scope of the present invention such as defined in the appended claims.

## Claims

1. Height adjustment device for a support rod (R) of a headrest for motor-vehicle seats, wherein said support rod (R) is provided with a series of positioning notches (T), said adjustment device (1) comprising a sleeve (2) through which the support rod (R) is axially slidably fitted and having an enlarged hollow portion (3) in which an annular locking slider (9) of moulded plastics material having a push button (10) is displaceable perpendicularly to the support rod (R) and adapted to cooperate, under the action of resilient thrust means (19), with said positioning notches (T) so as to prevent displacement of the support rod (R) relative to the sleeve (2), said locking slider (9) incorporating a metal element (12) whose ends are engaged with said slider (9) and whose central section acts as an engagement member with said positioning notches (T) of the support rod, characterized said metal element is formed by a pin (12) whose opposite ends are snap fitted within corresponding fork elements (11) integrally formed with said slider (9).

2. Device according to claim 1, characterized in that said enlarged hollow portion (3) has a bottom wall (16) formed with a pair of spaced-apart apertures (15) delimiting respective stepped catches (17), and in that said slider (9) has a corresponding pair of front resilient projections (13) formed with respective engagement teeth (14), said engagement teeth (14) being adapted to snap fit into said apertures (15) upon assembling the device (1) and to cooperate with said stepped catches (17), under the action of a compression helical spring (19) acting between a seat (20) of the enlarged hollow portion (3) and a bar element (18) of the slider (9) integrally formed between said front projections (13).

3. Device according to claim 1 or claim 2, characterized in that said sleeve (2) has a tubular appendage (4) beneath said enlarged hollow portion (3), intended to be axially fitted within an attachment tubular element (A) fixed to the structure (S) of the seat backrest, said tubular appendage (4) being formed with yelding axial tip sections (7) resiliently tightened against the support rod (R).

## Patentansprüche

1. Höheneinstelleinrichtung für eine Haltestange (R) einer Kopfstütze für Sitze von Motorfahrzeugen, wobei die Haltestange (R) mit einer Reihe von Positioniernuten (T) versehen ist und die Einstelleinrichtung (1) eine Hülse (2) umfaßt, durch welche die Haltestange (R) axial verschiebbar eingesteckt ist und die einen vergrößerten hohlen Bereich (3) besitzt, in dem ein ringförmiger Verriegelungsschieber (9) aus gegossenem Kunststoffmaterial mit einem Druckknopf (10) senkrecht zur Haltestange (R) verschiebbar ist und dazu geeignet ist, unter der Wirkung einer elastischen Schubeinrichtung (19) mit den Positioniernuten (T) zusammenzuwirken, um ein Verschieben der Haltestange (R) relativ zur Hülse (2) zu verhindern, wobei der Verriegelungsschieber (9) ein Metallelement (12) aufweist, dessen Enden mit dem Schieber (9) in Eingriff sind, und dessen mittiger Abschnitt als ein Eingriffselement mit den Positioniernuten (T) der Haltestange wirkt, dadurch gekennzeichnet, daß das Metallelement durch einen Stift (12) gebildet ist, dessen entgegengesetzte Enden innerhalb entsprechender Gabelelemente (11), die einstückig mit dem Schieber (9) gebildet sind, eingeschnappt sind.

2. Einrichtung gemäß Anspruch 1, dadurch gekennzeichnet, daß der vergrößerte hohle Bereich (3) eine untere Wand (16) besitzt, die mit einem Paar von beabstandeten Öffnungen (15) gebildet ist, welche entsprechende abgestufte Arretierungen (17) begrenzen, und daß der Schieber (9) ein entsprechendes Paar von vorderseitigen, elastischen Vorsprüngen (13) besitzt, die mit entsprechenden Eingriffszähnen (14) gebildet sind, wobei die Eingriffszähne (14) dazu geeignet sind, in die Öffnungen (15) bei der Montage der Einrichtung (1) einzuschnappen und mit den abgestuften Arretierungen (17) unter der Wirkung einer schraubenförmigen Druckfeder (19), die zwischen einem Sitz (20) des vergrößerten hohlen Bereichs (3) und einem Stangenelement (18) des Schiebers (9) wirkt, das einstückig zwischen den vorderen Vorsprüngen (13) gebildet ist, zusammenzuwirken.

3. Einrichtung gemäß Anspruch 1 oder Anspruch 2, dadurch gekennzeichnet, daß die Hülse (2) einen röhrenförmigen Ansatz (4) unter dem vergrößerten hohlen Bereich (3) besitzt, der dazu beabsichtigt ist, axial innerhalb eines röhrenförmigen Anbringeelements (A) eingesteckt zu werden, das mit dem Aufbau (S) der Fahrzeugrückenlehne befestigt ist, wobei der röhrenförmige Ansatz (4) mit nachgebenden axialen Spitzenabschnitten (7) gebildet ist, die elastisch gegen die Haltestange (R) gespannt sind.

## Revendications

1. Dispositif de réglage en hauteur pour une tige de support (R) d'un appui-tête pour des sièges de véhicules automobiles, dans lequel la tige de support (R) est pourvue d'une série d'encoches de positionnement (T), ledit dispositif d'ajustement (1) comprend un manchon (2) au moyen duquel la tige de support (R) est montée de manière à pouvoir glisser axialement et comporte une partie évidée élargie (3), dans laquelle un coulisseau annulaire de blocage (9) formé d'une matière plastique moulée et comportant un bouton-poussoir (10) est déplaçable perpendiculairement à la tige de support (R) et est adapté pour coopérer, sous l'action de moyens de poussée élastiques (19), avec lesdites encoches de positionnement (T) de manière à empêcher le décalage de la tige de support (R) par rapport au manchon (2), ledit coulisseau de blocage (9) comprenant un élément métallique (12), dont les extrémités engrènent avec ledit coulisseau (9) et dont la section centrale agit en tant qu'élément d'engrènement avec lesdites encoches de positionnement (T) de la tige de support, caractérisé en ce que ledit élément métallique est formé par une goupille (12) dont les extrémités opposées sont encliquetées dans des éléments en forme de fourches (11) correspondants, formés d'un seul tenant avec ledit coulisseau (9).

2. Dispositif selon la revendication 1, dans lequel ladite partie creuse élargie (3) possède une paroi inférieure (16) comportant une paire d'ouvertures espacées (15) délimitant des cliquets étagés respectifs (17), et en ce que ledit coulisseau (9) possède une paire correspondante de parties saillantes avant élastiques (13) formées de dents respectives d'engrènement (14), lesdites dents d'engrènement (14) étant adaptées pour s'encliqueter dans lesdites ouvertures lors de l'assemblage du dispositif (1), et coopérer avec lesdits cliquets étagés (17), sous l'action d'un ressort hélicoïdal de pression (19) agissant entre le siège (20) de la partie creuse élargie (3) et un élément en forme de barre (18) du coulisseau (9) formé d'un seul tenant entre lesdites parties saillantes avant (13).

3. Dispositif selon la revendication 1 ou la revendication 2, caractérisé en ce que ledit manchon (2) possède un appendice (4) situé au-dessous de ladite partie creuse élargie (3) et destiné à être inséré axialement dans un élément tubulaire de fixation (A) fixé à la structure (S) du dossier du siège, ledit appendice tubulaire (4) comportant des parties formant pointes axiales élastiques (7) qui sont serrées élastiquement contre la tige de support (R).
